# EUROPEAN PATENT APPLICATION

(11) **EP 1 511 286 A1**
(43) Date of publication of application: **02.03.2005**
(21) Application number: 04019900.2
(22) Date of filing: 23.08.2004
(51) Int. Cl.: H04M 11/06, G10L 15/00, G10L 13/00

(54) **Multimode voice/screen simultaneous communication device**

(30) Priority: 28.08.2003 US 651271; 17.04.2004 US 826101
(71) Applicant: ALCATEL, 75008 Paris (FR)
(72) Inventor: Wu, Fuming, TX 75035 Frisco (US); Mohammed, Aziz, TX 75024 Plano (US); Audu, Alexander, 75044 Garland Texas (US); Quian, Jing, 75024 Plano Texas (US); Kan, Chao, 75035 Frisco Texas (US); Skoog, Frederick H., 76034 Colleyville Texas (US)
(74) Representative: Dreiss, Fuhlendorf, Steimle & Becker

(57) **Abstract**

A communication device (102) is described herein that is capable of enabling a user to select whether they want to use voice communications, text communications or voice/text communications to communicate with a remote communication device used by a person or an automated phone service.

Also described herein are methods for making and using the communication device.

## Description

### BACKGROUND OF THE INVENTION

### Field of the Invention

The present invention relates in general to the communications field and, in particular, to a communication device that enables a user to select whether they want to use voice communications, text communications or voice/text communications to communicate with a remote communication device operated by a person or an automated phone service.

### Description of Related Art

Today in the telecommunications field, there is no communication device currently available that enables a user to select whether they want to use voice communications, text communications or voice/text communications to communicate with a remote communication device that is operated by a person or an automated phone service. It would be desirable if there was such a communication device available because that would enable:
- A user to use voice communications to communicate with a voice-only-capable remote communication device.
- A user to use voice communications to communicate with a text-only-capable remote communication device.
- A user to use text communications to communicate with a text-only-capable remote communication device.
- A user to use text communications to communicate with a voice-only-capable remote communication device.
- A user to use voice and/or text communications to communicate with a voice-only-capable remote communication device. In this scenario, the user can listen to voice communications received from the voice-only-capable remote communication device and at the same time view a text version of the voice communications received from the voice-only-capable remote communication device.
- A user to use voice and/or text communications to communicate with a text-only-capable remote communication device. In this scenario, the user can view text communications received from the text-only-capable remote communication device and at the same time hear a voice version of the text communications received from the text-only-capable remote communication device.
- A user to use voice and/or text communications to communicate with a text-and-voice capable remote communication device. In this scenario, the user can view text communications and at the same time hear voice communications received from the text-and-voice capable remote communication device.

These needs and other needs are addressed by the communication device of the present invention.

### BRIEF DESCRIPTION OF THE INVENTION

The present invention includes a communication device capable enabling a user to select whether they want to use voice communications, text communications or voice/text communications to interact with a user/automated phone service using a remote communication device. In the preferred embodiment, the communication device includes a selector for enabling the user to select and activate one of the following: (1) a speech module for enabling the user to use voice communications to communicate with a voice-capable remote communication device; (2) a text/speech module for enabling the user to use voice communications to communicate with a text-capable remote communication device; (3) a text module for enabling the user to use text communications to communicate with a text-capable remote communication device; (4) a speech/text module for enabling the user to use text communications to communicate with a voice-capable remote communication device; (5) a speech/text module and a speech module for enabling the user to listen to voice communications received from a voice-capable remote communication device and at the same time view a text version of the voice communications received from the voice-capable remote communication device; (6) a text/speech module and a text module for enabling the user to view text communications received from a text-capable remote communication device and at the same time hear a voice version of the text communications received from the text-capable remote communication device; or (7) a speech module and a text module for enabling the user to view text communications and at the same time hear voice communications received from a remote communication device configured like the new communication device. The present invention also includes methods for making and using the communication device.

### BRIEF DESCRIPTION OF THE DRAWINGS

A more complete understanding of the present invention may be obtained by reference to the following detailed description when taken in conjunction with the accompanying drawings wherein:
FIGURE 1 is a block diagram showing a user of a communication device configured in accordance with the present invention that is interacting with a user/automated phone service using a remote communication device;
FIGURE 2 is a block diagram showing the communication device shown in FIGURE 1 configured to enable the user to use voice communications to interact with a user/automated phone service using a voice-only-capable remote communication device;
FIGURE 3 is a block diagram of the communication device shown in FIGURE 1 configured to enable the user to use voice communications to interact with a user/automated phone service using a text-only-capable remote communication device;
FIGURE 4 is a block diagram of the communication device shown in FIGURE 1 configured to enable the user to use text communications to interact with a user/automated phone service using a text-only-capable remote communication device;
FIGURE 5 is a block diagram of the communication device shown in FIGURE 1 configured to enable the user to use text communications to interact with a user/automated phone service using a voice-only-capable remote communication device;
FIGURE 6 is a block diagram of the communication device shown in FIGURE 1 configured to enable the user to use voice/text communications to interact with a user/automated phone service using a voice-only-capable remote communication device;
FIGURE 7 is a block diagram of the communication device shown in FIGURE 1 configured to enable the user to use voice/text communications to interact with a user/automated phone service using a text-only-capable remote communication device;
FIGURE 8 is a block diagram of the communication device shown in FIGURE 1 configured to enable the user to use voice/text communications to interact with a user/automated phone service using a remote communication device configured like the communication device shown in FIGURE 1;
FIGURES 9A-9B is a flowchart of the basic steps of a preferred method for using the communication device shown in FIGURE 1 in accordance with the present invention; and
FIGURE 10 is a flowchart showing the basic steps of a preferred method for making the communication device shown in FIGURE 1 in accordance with the present invention.

### DETAILED DESCRIPTION OF THE DRAWINGS

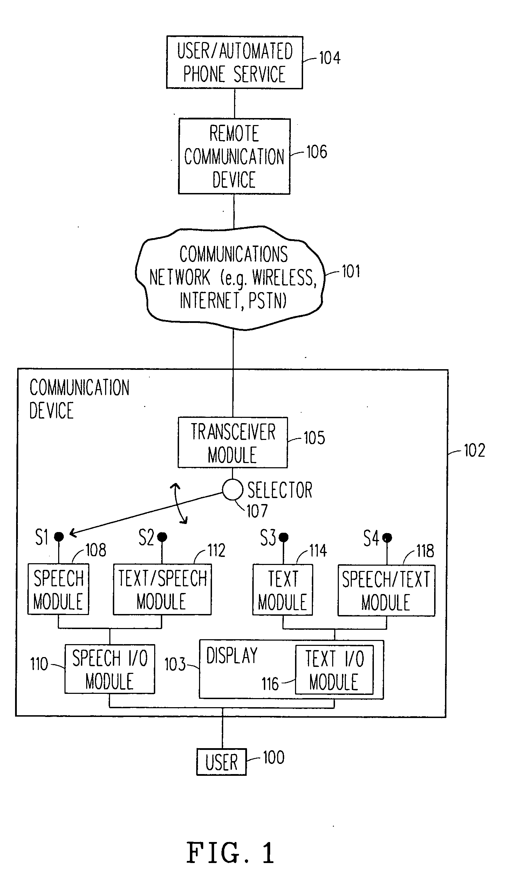

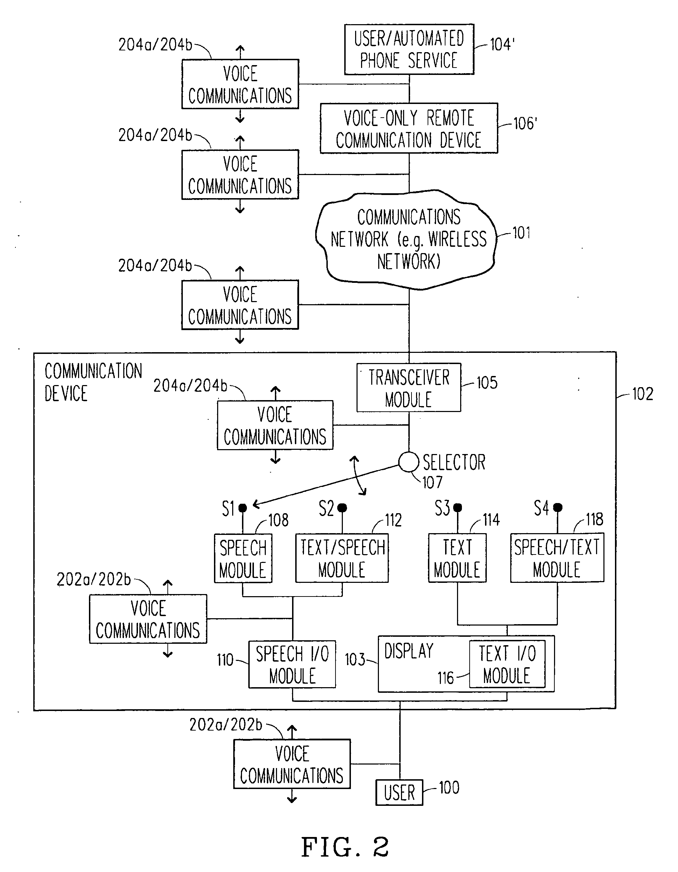

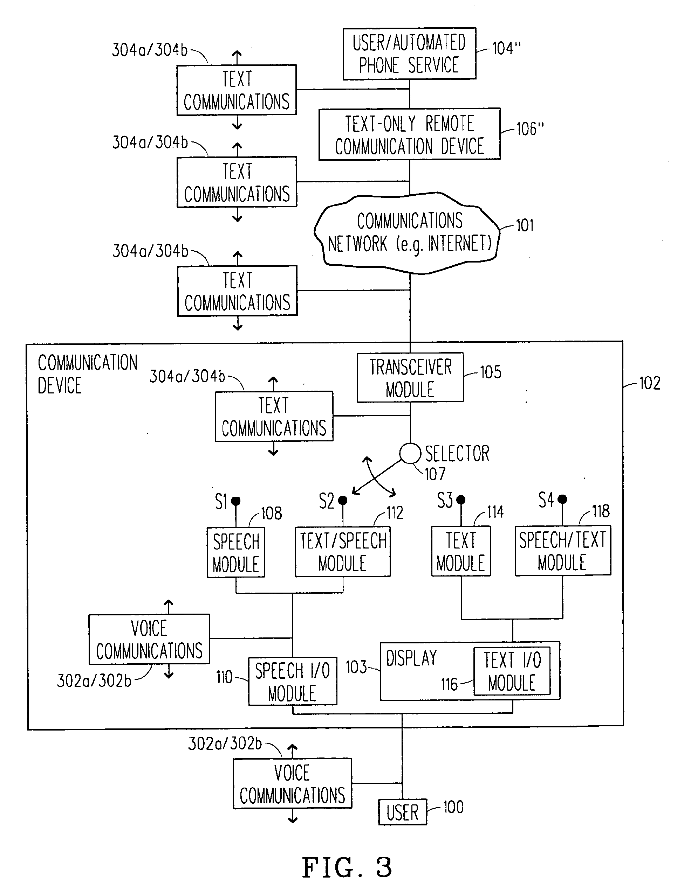

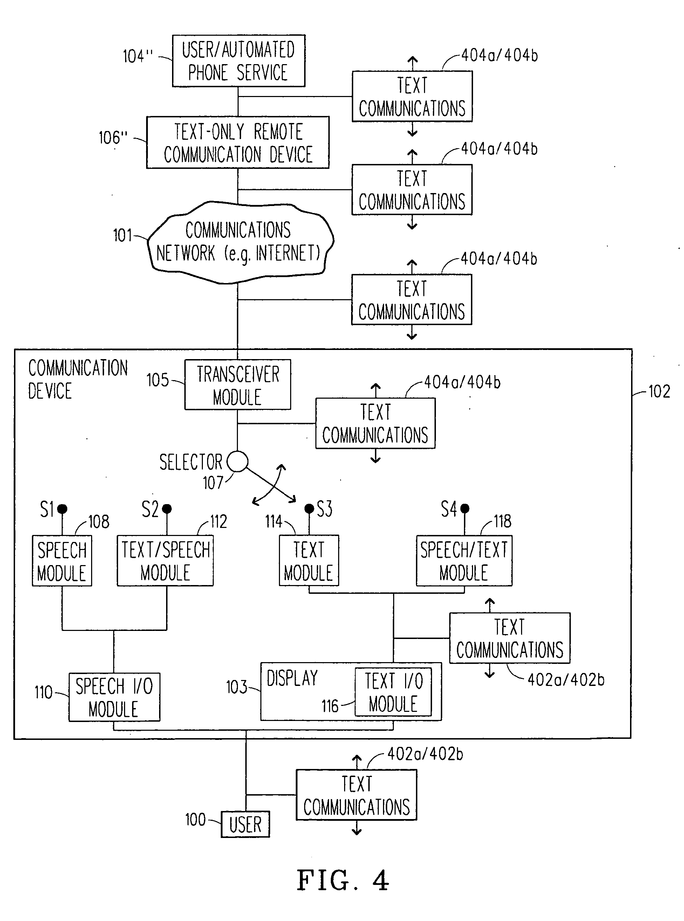

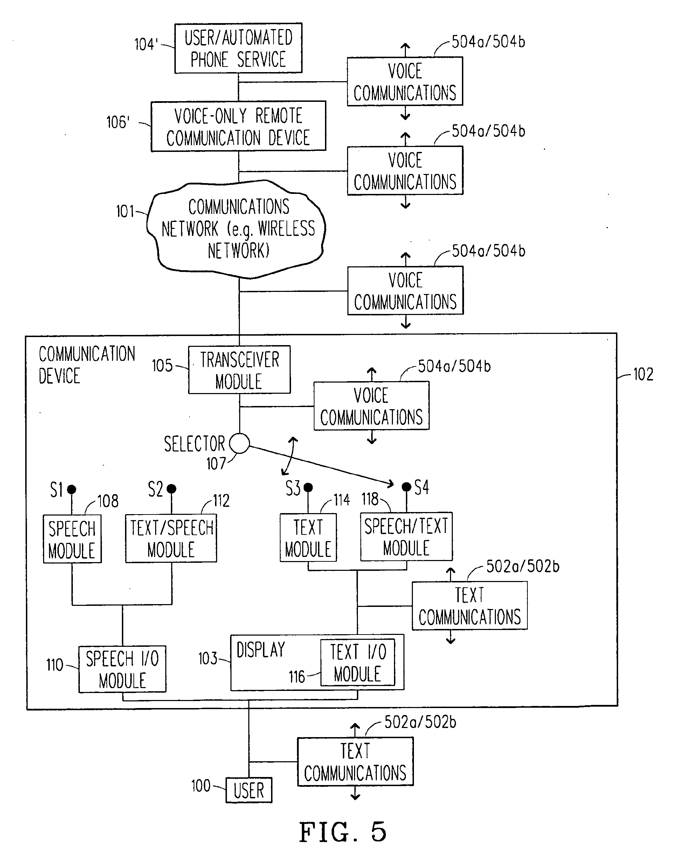

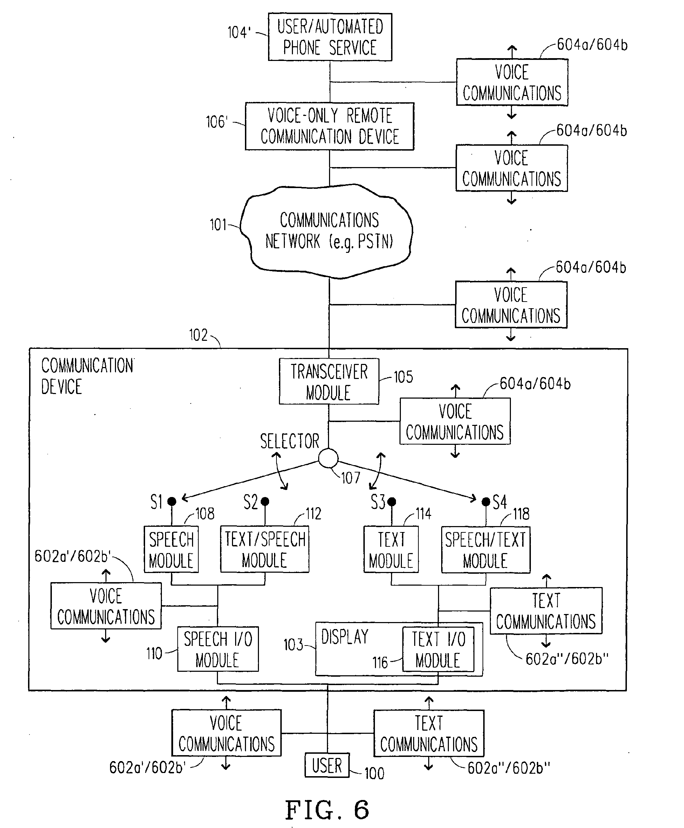

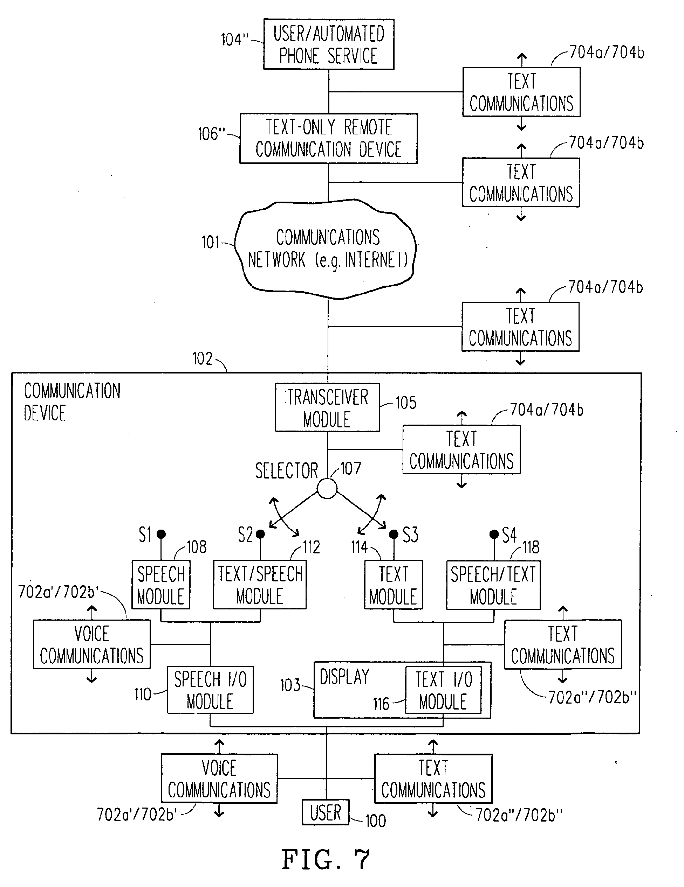

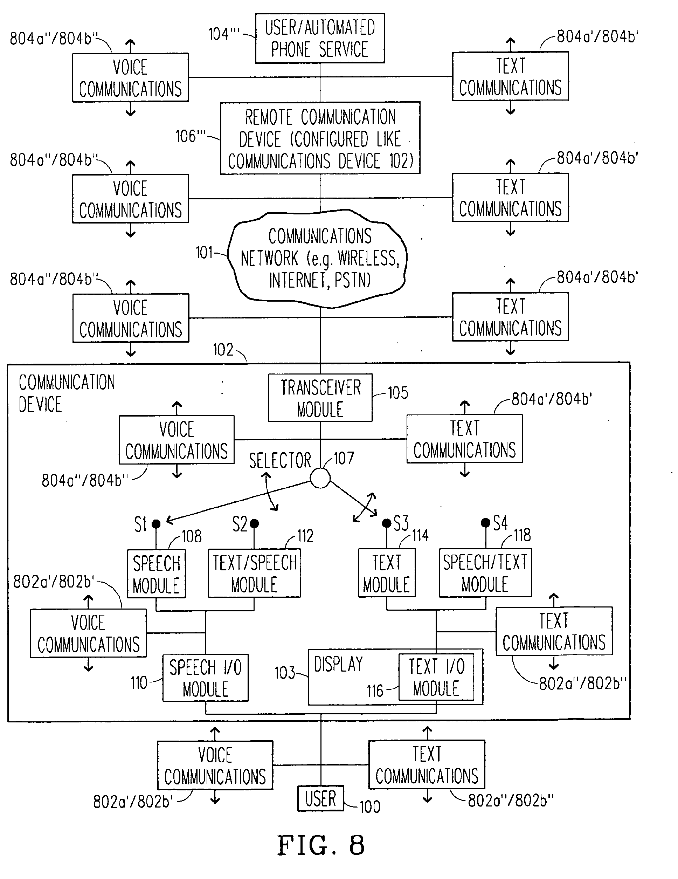

Referring to FIGURE 1, there is shown a block diagram illustrating a user 100 of a communication device 102 configured in accordance with the present invention interacting a user/automated phone service 104 of a remote communication device 106 (e.g., traditional communication device 106). Basically, the communication device 102 is capable enabling the user 100 to select whether they want to use voice communications, text communications or voice/text communications to interact with the user/automated phone service 104 of the remote communication device 106. In particular, the communication device 102 is configured to enable the user 100 to select whether they want to use voice communications, text communications or voice/text communications to communicate in real time through a communications network 101 (e.g., wireless network, Internet, public switched telephone network (PSTN)) with the user/automated phone service 104 of the remote communication device 106 that can be: (1) a voice-only-capable communication device 106'; (2) a text-only-capable communication device 106''; or (3) a voice-and-text capable communication device 106'''. Stated in another way, the communication device 102 can enable:
- The user 100 to use voice communications to communicate with a user/automated phone service 104' of a voice-only-capable remote communication device 106' (see FIGURE 2).
- The user 100 to use voice communications to communicate with a user/automated phone service 104'' of a text-only-capable remote communication device 106'' (see FIGURE 3).
- The user 100 to use text communications to communicate with a user/automated phone service 104'' of a text-only-capable remote communication device 106'' (see FIGURE 4).
- The user 100 to use text communications to communication with a user/automated phone service 104' of a voice-only-capable remote communication device 106' (see FIGURE 5).
- The user 100 to use voice/text communications to communicate with a user/automated phone service 104' of a voice-only-capable remote communication device 106' (see FIGURE 6).
- The user 100 to use voice/text communications to communicate with a user/automated phone service 104'' of a text-only-capable remote communication device 106" (see FIGURE 7).
- The user 100 to use voice/text communications to communicate with a user/automated phone service 104''' of a remote communication device 106''' configured like communication device 102 (see FIGURE 8).

It should be appreciated that in the different scenarios described herein that a voice-and-text capable communication device 106 can be used by the user/automated phone service 104 instead of the voice-only-capable remote communication device 106' and the text-only-capable remote communication device 106''.

As shown in FIGURE 1, the communication device 102 includes a display 103 (shown associated with the text input/out module 116), transceiver (transmit/receive) module 105 and a selector 107 (e.g., switch 107, push-buttons/keys 107, voice-activated selector 107) that enables the user 100 to select and activate one of the following:
- A speech module 108 and a speech input/output module 110 (e.g., microphone/speaker 110) that enables the user 100 to use voice communications to communicate with the user/automated phone service 104' of the voice-only-capable remote communication device 106' (see FIGURE 2).
- A text/speech module 112 and the speech input/output module 110 (e.g., microphone/speaker 110) that enables the user 100 to use voice communications to communicate with the user/automated phone service 104'' of a text-only-capable remote communication device 106'' (see FIGURE 3).
- A text module 114 and a text input/output module 116 (e.g., buttons/screen 116, keyboard/screen 116) that enables the user 100 to use text communications to communicate with the user/automated phone service 104'' of a text-only-capable remote communication device 106" (see FIGURE 4).
- A speech/text module 118 and the text input/output module 116 (e.g., buttons/screen 116, keyboard/screen 116) that enables the user 100 to use text communications to communicate with the user/automated phone service 104' of the voice-only-capable remote communication device 106' (see FIGURE 5).
- The speech/text module 118, the speech module 108, the speech input/output module 110 and the text input/output module 116 that enables the user 100 to use voice/text communications to communicate with the user/automated phone service 104' of the voice-only-capable remote communication device 106' (see FIGURE 6).
- The text/speech module 112, the text module 114, the speech input/output module 110 and the text input/output module 116 that enables the user 100 to use voice/text communications to communicate with the user/automated phone service 104'' of the text-only-capable remote communication device 106'' (see FIGURE 7).
- The speech module 108, the text module 114, the speech input/output module 110 and the text/speech module 112 that enables the user 100 to use voice/text communications to communicate with the user 104''' of the voice-and-text capable remote communication device 106''' (see FIGURE 8). It should be noted that the remote communication device 106''' can be configured like the communication device 102

It should be appreciated that certain components associated with the communication device 102 like the transceiver, receiver, modulator, demodulator etc... are well known in the industry and as such are not described herein. Therefore, the description provided herein in relation to the communication device 102 describes only the components that enable the user 100 to select whether they want to use voice communications, text communications or voice/text communications to communicate with the user/automated phone service 104 of the remote communication device 106.

In operation, the user 100 can select and activate one or more of the components 108, 112, 114 and 118 after they receive a communication (e.g., voice communications, text communications) from the user/automated phone service 104 of the remote communication device 106. For instance upon receiving a voice communication from the user/automated phone service 104, the communication device 102 may output a voice communication to the user 100 and then let the user 100 select if they want to use voice communications (see FIGURE 2), text communications (see FIGURE 5) or voice/text communications (see FIGURE 6) to interact with the user/automated phone service 104. Likewise upon receiving a text communication from the user/automated phone service 104, the communication device 102 may output a text communication to the user 100 and then let the user 100 select if they want to use voice communications (see FIGURE 3), text communications (see FIGURE 4) or voice/text communications (see FIGURE 7) to interact with the user/automated phone service 104. It should be appreciated that the user 100 can switch back-and-forth between voice, text or voice/text communications during the conversation with the user/automated phone service 104.

The user 100 can also select and activate one or more of the components 108, 112, 114 and 118 to initiate communications (e.g., voice communications, text communications) with the user/automated phone service 104 of the remote communication device 106. To initiate the call the user 100 may need to know the capabilities of the communication device 106 being used by the user/automated phone service 104. This is often not troublesome since the user 100 would typically know if the user/automated phone service 104 is using a voice-only-capable communication device 106', a text-only-capable communication device 106'' or a voice-and-text capable communication device 106'''. Alternatively, to initiate the call the user 100 may not need to know the capabilities of the communication device 106 being used by the user/automated phone service 104 if there is a middleware translation such as a user preference server used within the network 101 that can help the user 100 to initiate the call in the correct form to the user/automated phone service 104. After the call is initiated the user 100 can select between using voice, text or voice/text communications during the conversation with the user/automated phone service 104. In addition, the user 100 can switch back-and-forth between voice and text communications during the conversation with user/automated phone service 104.

A more detailed discussion about how the user 100 can select whether they want to use voice communications, text communications or voice/text communications to communicate with the user/automated phone service 104 of the remote communication device 106 and about each of the components 108, 112, 116 and 118 operate is provided below with respect to FIGURES 2-8. Also, Table #1 is provided below to graphically indicate the various capabilities of the communication device 102.

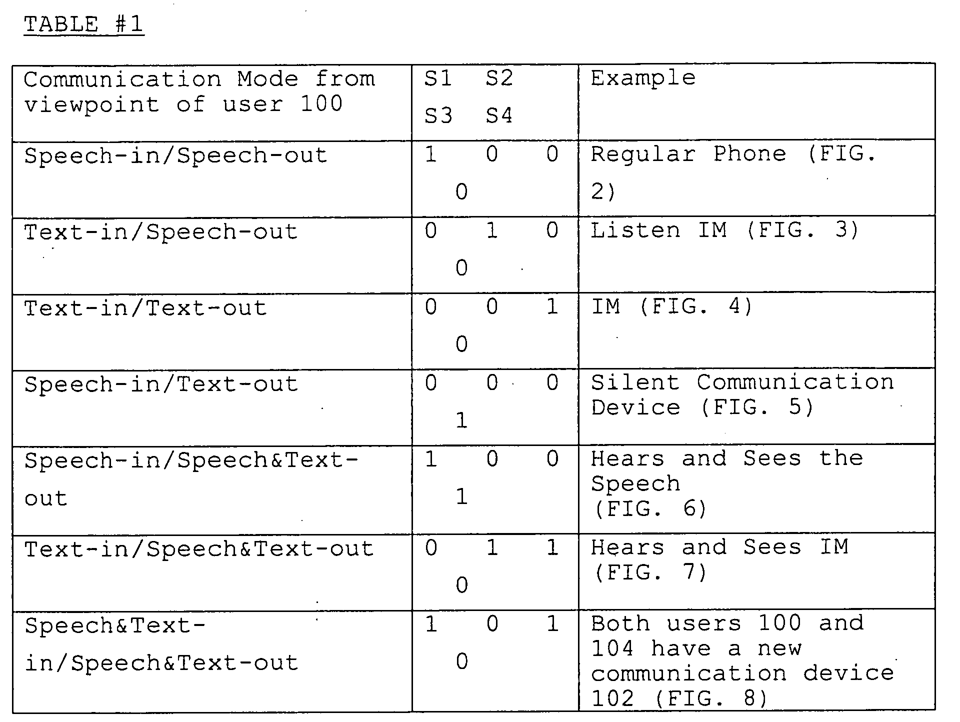

Referring to FIGURE 2, there is a block diagram showing the communication device 102 configured to enable the user 100 to use voice communications to communicate with the user/automated phone service 104' of a traditional voice-only-capable communication device 106' (e.g., mobile phone 106', land-line phone 106', graphical proxy terminal 106'). In this configuration, the user 100 moved the selector 107 to position "S1" such that the speech module 108 and the speech input/output module 110 are activated and enabled so the user 100 can use voice communications 202a and 202b to communicate in real time through communication network 101 (e.g., wireless network 101) with the user/automated phone service 104' of the voice-only-capable remote communication device 106'.

As shown, the user 100 can receive/hear voice communications 202a from the speech input/output module 110 (e.g., microphone/speaker 110) which were processed by the speech module 108 after being received by the transceiver module 105 as voice communications 204a from the user/automated phone service 104' of the voice-only-capable remote communication device 106'. The user 100 can also output/speak voice communications 202b to the speech input/output module 110 which are processed by the speech module 108 and transmitted as voice communications 204b by the transceiver module 105 to the.user/automated phone service 104' of the voice-only-capable remote communication device 106'. It should be appreciated that the user 100 can hear the actual voice of the user/automated phone service 104' and vice versa. In this configuration, the user 100 can use the communication device 102 like a regular phone.

Referring to FIGURE 3, there is a block diagram showing the communication device 102 configured to enable the user 100 to use voice communications to communicate with the user/automated phone service 104'' of a traditional text-only-capable communication device 106" (e.g., personal digital assistant 106'', personal computer 106'', graphical proxy terminal 106''). In this configuration, the user 100 moved the selector 107 to position "S2" such that the text/speech module 112 and the speech input/output module 110 (e.g., microphone/speaker 110) are activated and enabled so the user 100 can use voice communications 302a and 302b to communicate in real time through the communications network 101 (e.g., Internet 101) with the user/automated phone service 104'' of the text-only-capable remote communication device 106''.

As shown, the user 100 can receive/hear voice communications 302a (e.g., computer generated/mechanical voice communications 302a) from the speech input/output module 110 (e.g., microphone/speaker 110) which have been processed by the text/speech module 112 and converted into the received voice communications 302a from text communications 304a (e.g., Instant Messages 304a) that where transmitted from the text-only-capable remote communication device 106''. The user 100 can also output/speak voice communications 302b into the speech input/output module 110 which are processed by the text/speech module 112 and converted into text communications 304b that are. processed by the transceiver module 105 and transmitted to the user/automated phone service 104'' of the text-only-capable remote communication device 106''. In this configuration, the user 100 can use the communication device 102 to hear a computer generated voice of a received IM message and to speak a voice message which is converted into an IM message that is sent to the text-only-capable remote communication device 106''.

Referring to FIGURE 4, there is a block diagram showing the communication device 102 configured to enable the user 100 to use text communications 402a and 402b to communicate with the user/automated phone service 104'' of a traditional text-only-capable communication device 106" (e.g., personal digital assistant 106'', personal computer 106'', graphical proxy terminal 106''). In this configuration, the user 100 moved the selector 107 to position "S3" such that the text module 114 and the text input/output module 116 (e.g., buttons/screen 116, keyboard/screen 116) are activated and enabled so the user 100 can use text communications 402a and 402b to communicate in real time through communications network 101 (e.g., Internet 101) with the user/automated phone service 104'' of the text-only-capable remote communication device 106''.

As shown, the user 100 can receive/see text communications 402a (e.g., IM messages 402a) from the text input/output module 116 (e.g., display 103) which have been processed by the text module 114 after being received as text communications 404a (e.g., IM messages 404a) from the user/automated phone service 104'' of the text-only-capable remote communication device 106''. The user 100 can also output/type text communications 404b (e.g., IM messages 404b) into the text input/output module 116 (e.g., display 103) which are processed by the text module 114 and transmitted by the transceiver module 105 as text communications 404b to the user/automated phone service 104" of the text-only-capable remote communication device 106''. In this configuration, the user 100 can use the communication device 102 to receive and send IM messages to a text-only-capable remote communication device 106''.

Referring to FIGURE 5, there is a block diagram showing the communication device 102 configured to enable the user 100 to use text communications to communicate with the user/automated phone service 104' of a traditional voice-only-capable communication device 106' (e.g., mobile phone 106', land-line phone 106', graphical proxy terminal 106'). In this configuration, the user 100 moved the selector 107 to position "S4" such that a speech/text module 118 and the text input/output module 116 (e.g., buttons/screen 116, keyboard/screen 116) are activated and enabled so the user 100 can use text communications 502a and 502b (e.g., IM messages 502a and 502b) to communicate in real time through communications network 101 (e.g., wireless network 101) with the user/automated phone service 104' of the voice-only-capable remote communication device 106'.

As shown, the user 100 can receive/read text communications 502a (e.g., IM messages 502a) from the text input/output module 116 (e.g., display 103) which have been processed by the speech/text module 118 and converted into the received text communications 502a from voice communications 504a transmitted from the user/automated phone service 104' of the voice-only-capable remote communication device 106''. The user 100 can also output/type text communications 502b (e.g., IM messages 502b) into the text input/output module 116 (e.g., display 103) which are processed by the speech/text module 118 and converted into voice communications 504b (e.g., computer generated/mechanical voice communications 504b) that are transmitted from the transceiver module 105 to the user/automated phone service 104' of the voice-only-capable remote communication device 106'.

It should be appreciated that the communication device 102 having the selector 107 positioned at "S4" could further enhance the popularity of IM technology by enabling voice-to-IM communications and vice versa (see also FIGURE 3). For instance, a major benefit of this particular configuration is that it allows the user 100 who may be attending a meeting to use silent textual communications 502a and 504b to communicate with a voice peer 104' while not having to leave the meeting room to speak aloud to communicate with the voice peer 104'.

Referring to FIGURE 6, there is a block diagram showing the communication device 102 configured to enable the user 100 to use either text communications or voice communications to communicate with the user/automated phone service 104' of a traditional voice-only-capable communication device 106' (e.g., mobile phone 106', land-line phone 106', graphical proxy terminal 106'). In this configuration, the user 100 moved the selector 107 to position "S1/S4" such that the speech/text module 118, the speech module 108, the speech input/output module 110 and the text input/output module 116 are activated and enabled so the user 100 can either voice communications 602a'/602b' or text communications 602a''/602b'' to communicate in real time through communications network 101 (e.g., wireless network 101) with the user/automated phone service 104' of the voice-only-capable remote communication device 106'.

As shown, the user 100 can receive/hear voice communications 602a' from the speech input/output module 110 that were processed by the speech module 108 after being received as voice communications 604a from the voice-capable remote communication device. At the same time, the user 100 can receive/read text communications 602a'' from the text input/output module 116 (e.g., display 103) which have been processed by the speech/text module 118 and converted into the received text communications 602a'' from the voice communications 604a transmitted from the voice-only-capable remote communication device 106'. In other words, the user 100 can listen to voice communications 604a received from the voice-only-capable remote communication device 106' and at the same time view a text version of the voice communications 604a received from the voice-only-capable remote communication device 106'.

The user 100 can also output/speak voice communications 602b' to the speech input/output module 110 which are processed by the speech module 108 and transmitted as voice communications 604b by the transceiver module 105 to the user/automated phone service 104' of the voice-only-capable remote communication device 106'. Or, the user 100 can output/type text communications 602b'' into the text input/output module 116 (e.g., display 103) which are processed by the speech/text module 118 and converted into voice communications 604b (e.g., computer generated/mechanical voice communications 604b) that are transmitted from the transceiver module 105 to the user/automated phone service 104' of the voice-only-capable remote communication device 106'.

An exemplary situation in which this configuration of the communication device 102 may be useful is when the user 100 contacts an automated service provider 104' (e.g., interactive voice response (IVR) 104') which has access to a web application server and data/documents (not shown). For instance, the user 100 may use the communication device 102 to contact the automated service provider 104' associated with their employer's human resource department which uses a voice-only-capable remote communication device 106'. In response to the call, the automated service provider 104' could use a computer generated voice to speak the following menu below and ask the user 100 to press or say one of the options to obtain further information:
1. Benefits and pension plan information.
2. Pension, 401K and stock-purchase account servicing.
3. Employment application information.
4. Training course scheduling and sign-up.
5. Employee communications.
6. Schedule interview appointments.
7. Personnel record auditing and tracking.
8. Payroll inquiries.
9. Crisis communications: disasters, closings due to weather.
0. Repeat this menu.

The user 100 can configure the communication device 102 by moving the selector 107 to position "S1/S4" such that they can hear the computer generated voice say the menu and at the same time see a text version of the menu. The user 100 can then respond by using voice or a text input to select anyone of the particular options in the menu. This type of communication is a marked improvement over the traditional communication device where the user could only listen to the computer generated voice and had to remember/listen to all of these options before selecting one of the options.

Referring to FIGURE 7, there is a block diagram showing the communication device 102 configured to enable the user 100 to use either text communications or voice communications to communicate with the user/automated phone service 104'' of a traditional text-only-capable communication device 106'' (e.g., mobile phone 106", land-line phone 106'', graphical proxy terminal 106''). In this configuration, the user 100 moved the selector 107 to position "S2/S3" such that the text/speech module 112, the text module 114, the speech input/output module 110 and the text input/output module 116 are activated and enabled so the user 100 can either voice communications 702a'/702b' or text communications 702a''/702b'' to communicate in real time through communications network 101 (e.g., Internet 101) with the user/automated phone service 104'' of the text-only-capable remote communication device 106''.

As shown, the user 100 can receive/read text communications 702a'' from the text input/output module 116 (e.g., display 103) which have been processed by the text module 114 after being received as text communications 704a from the user/automated phone service 104'' of the text-only-capable remote communication device 106''. At the same time, the user 100 can receive/hear voice communications 702a' (e.g., computer generated/mechanical voice communications 702a') from the speech input/output module 110 (e.g., microphone/speaker 110) which have been processed by the text/speech module 112 and converted into the received voice communications 702a' from text communications 704a that where transmitted from the text-only-capable remote communication device 106''. In other words, the user 100 can view text communications 704a'' received from the text-only-capable remote communication device 106'' and at the same time hear a voice version of the text communications 704a received from the text-only-capable remote communication device 106''.

The user 100 can also output/type text communications 702b'' into the text input/output module 116 (e.g., display 103) which are processed by the text module 114 and transmitted by the transceiver module 105 as text communications 704b to the user/automated phone service 104'' of the text-only-capable remote communication device 106''. Or, the user 100 can output/speak voice communications 702b' into the speech input/output module 110 which are processed by the text/speech module 112 and converted into text communications 704b that are processed by the transceiver module 105 and transmitted to the user/automated phone service 104'' of the text-only-capable remote communication device 106''.

Referring to FIGURE 8, there is a block diagram showing the communication device 102 configured to enable the user 100 to use both text communications and voice communications to communicate with the user/automated phone service 104''' of a remote communication device 106''' configured like the communication device 102. In this configuration, the user 100 moved the selector 107 to position "S1/S3" such that the speech module 108, the text module 114, the speech input/output module 110 and the text input/output module 116 are activated and enabled so the user 100 can both voice communications 802a'/802b' and text communications 802a''/802b'' to communicate in real time through communications network 101 (e.g., wireless network 101, Internet 101) with the user/automated phone service 104''' of the remote communication device 106'''.

As shown, the user 100 can receive/read text communications 802a" from the text input/output module 116 (e.g., display 103) which have been processed by the text module 114 after being received as text communications 804a' from the user/automated phone service 104''' of the remote communication device 106'''. At the same time, the user 100 can receive/hear voice communications 802a' from the speech input/output module 110 that were processed by the speech module 108 after being received as voice communications 804a" from the remote communication device 106'''. In other words, the user 100 can view text communications 802a'' and at the same time hear a voice communications 802a' from the remote communication device 106''' when the text communications 802a'' are different than the voice communications 802a'.

The user 100 can also output/type text communications 802b'' into the text input/output module 116 (e.g., display 103) which are processed by the text module 114 and transmitted by the transceiver module 105 as text communications 804b' to the user/automated phone service 104''' of the remote communication device 106'''. And at the same time, the user 100 can output/speak voice communications 802b' to the speech input/output module 110 which are processed by the speech module 108 and transmitted as voice communications 804b'' by the transceiver module 105 to the user/automated phone service 104''' of the remote communication device 106'''.

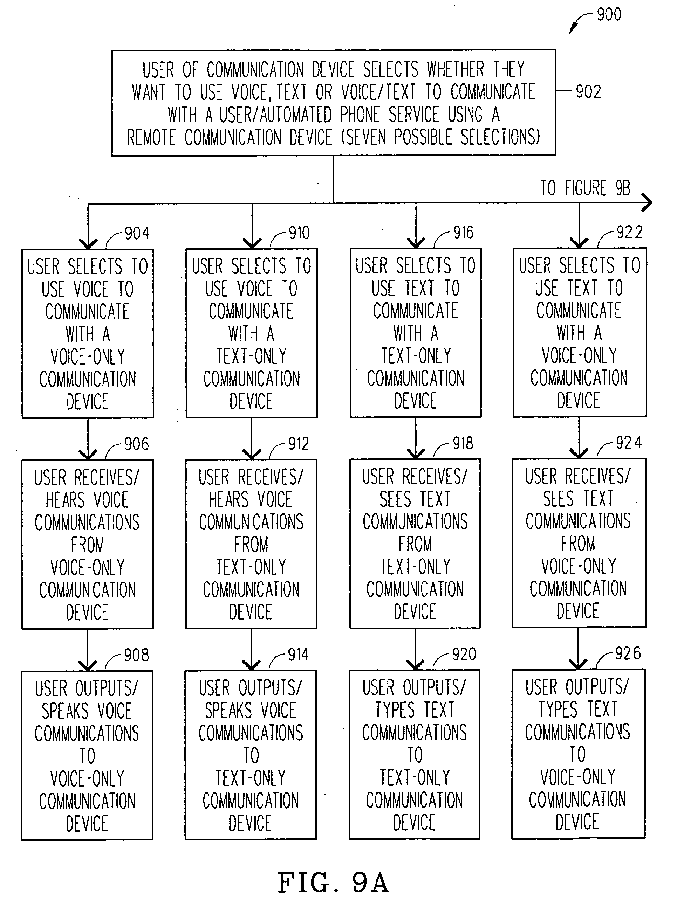

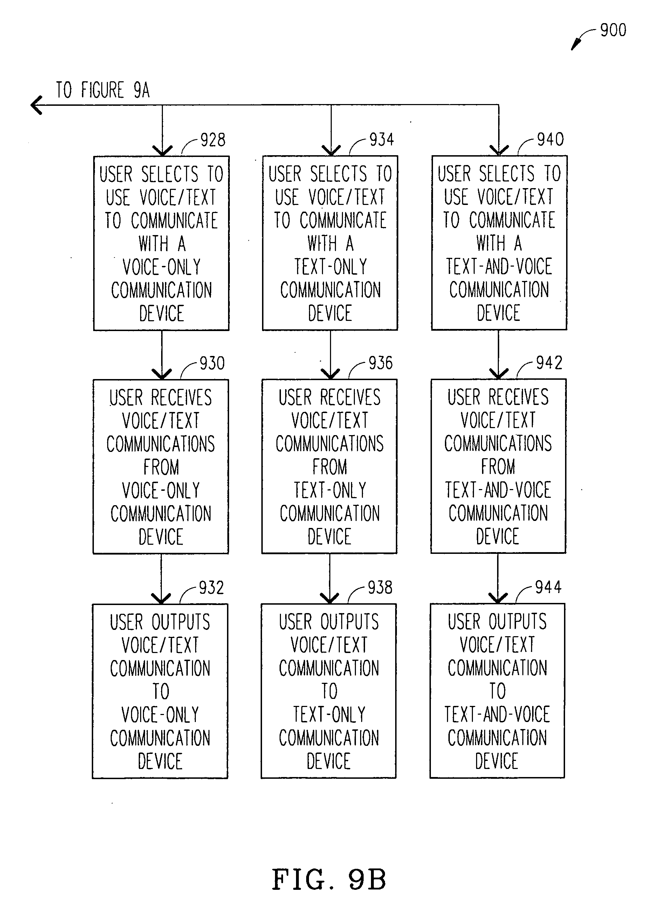

Referring to FIGURES 9A-9B, there is a flowchart showing the basic steps of a preferred method 900 for using the communication device 102 in accordance with the present invention. Beginning at step 902, the user 100 can select whether they want to use voice communications, text communications or voice/text communications to communicate with the user/automated phone service 104 of a remote communication device 106 by letting the user 100 activate one of the following:
- The speech module 108 and the speech input/output module 110 (e.g., microphone/speaker 110) that enables the user 100 to use voice communications to communicate with the user/automated phone service 104' of the voice-only-capable remote communication device 106' (see step 904 and FIGURE 2). In this configuration, the user 100 of the communication device 102 can receive/hear voice communications 202a from the user/automated phone service 104' that speaks voice communications 204a into the voice-only-capable remote communication device 106' (step 906). And, the user 100 of the communication device 102 can output/speak voice communications 202b to the user/automated phone service 104' that hears voice communications 204b from the voice-only-capable remote communication device 106' (step 908).
- The text/speech module 112 and the speech input/output module 110 (e.g., microphone/speaker 110) that enables the user 100 to use voice communications to communicate with the user/automated phone service 104'' of a text-only-capable remote communication device 106" (see step 910 and FIGURE 3). In this configuration, the user 100 of the communication device 102 can receive/hear computer generated voice communications 302a from the user/automated phone service 104'' that inputs text communications 304a into the text-only-capable remote communication device 106" (step 912). And, the user 100 of the communication device 102 can output/speak voice communications 302b to the user/automated phone service 104'' that receives/sees text communications 304b from the text-only-capable remote communication device 106''(step 914).
- The text module 114 and the text input/output module 116 (e.g., buttons/screen 116, keyboard/screen 116) that enables the user 100 to use text communications to communicate with the user/automated phone service 104 of a text-only-capable remote communication device 106''(see step 916 and FIGURE 4). In this configuration, the user 100 of the communication device 102 can receive/see text communications 402a from the user/automated phone service 104''
- that inputs text communications 404a into the text-only-capable remote communication device 106'' (step 918). And, the user 100 of the communication device 102 can output/type text communications 402b to the user/automated phone service 104'' that receives/sees text communications 404b from the text-only-capable remote communication device 106'' (step 920).
- The speech/text module 118 and the text input/output module 116 (e.g., buttons/screen 116, keyboard/screen 116) that enables the user 100 to use text communications to communicate with the user/automated phone service 104' of the voice-only-capable remote communication device 106' (see step 922 and FIGURE 5). In this configuration, the user 100 of the communication device 102 can receive/see text communications 502a from the user/automated phone service 104' that inputs voice communications 504a into the voice-only-capable remote communication device 106' (step 924). And, the user 100 of the communication device 102 can output/type text communications 502b to the user/automated phone service 104' that receives/hears computer generated voice communications 504b from the voice-only-capable remote communication device 106' (step 926).
- The speech/text module 118, the speech module 108, the speech input/output module 110 and the text input/output module 116 that enables the user 100 to use either voice communications 602a'/602b' or text communications 602a''/602b'' to communicate with the user/automated phone service 104' of the voice-only-capable remote communication device 106' (see step 928 and FIGURE 6). In this configuration, the user 100 of the communication device 102 can receive/see text communications 602a" and at the same time receive/hear voice communications 602a' from the user/automated phone service 104' that inputs voice communications 604a into the voice-only-capable remote communication device 106' (step 930). Again, it should be noted that the content of the voice communications 602a' is the same as content of the text communications 602a''. And, the user 100 of the communication device 102 can output/speak voice communications 602b'' or output/type text communications 602b'' which are converted to computer generated voice communications 604b that are transmitted to the user/automated phone service 104' of voice-only-capable remote communication device 106' (step 932).
- The text/speech module 112, the text module 114, the speech input/output module 110 and the text input/output module 116 that enables the user 100 to use either voice communications or text communications to communicate with the user/automated phone service 104'' of the text-only-capable remote communication device 106'' (see step 934 and FIGURE 7). In this configuration, the user 100 of the communication device 102 can receive/see text communications 702a'' and at the same time receive/hear computer generated voice communications 702a' from the user/automated phone service 104'' that inputs text communications 704a into the voice-only-capable remote communication device 106' (step 936). Again, it should be noted that the content of the voice communications 702a' is the same as content of the text communications 702a''. And, the user 100 of the communication device 102 can output/type text communications 702b'' or output/speak voice communications 702b'' both of which are converted to text communications 704b and transmitted to the user/automated phone service 104'' of text-only-capable remote communication device 106" (step 938).
- The speech module 108, the text module 114, the speech input/output module 110 and the text/speech module 112 that enables the user 100 to use voice communications and text communications to communicate with the user 104''' of the text-and-voice capable remote communication device 106''' that can be configured like the communication device 102 (see step 940 and FIGURE 8). In this configuration, the user 100 of the communication device 102 can receive/see text communications 802a'' and at the same time receive/hear voice communications 802a' from the user/automated phone service 104''' that inputs both voice communications 804a'' and text communications 804a' into the remote communication device 106'''(step 942). Again, it should be noted that the content of the voice communications 802a' is different than the content of the text communications 802a''. And, the user 100 of the communication device 102 can output/type text communications 802b'' and at the same time output/speak voice communications 802b' both of which transmitted to the user/automated phone service 104''' of the remote communication device 106''' (step 944).

Again, it should be appreciated that in these different scenarios the user/automated phone service 104 can use a voice-and-text capable communication device 106''' instead of the voice-only-capable remote communication device 106' and the text-only-capable remote communication device 106''.

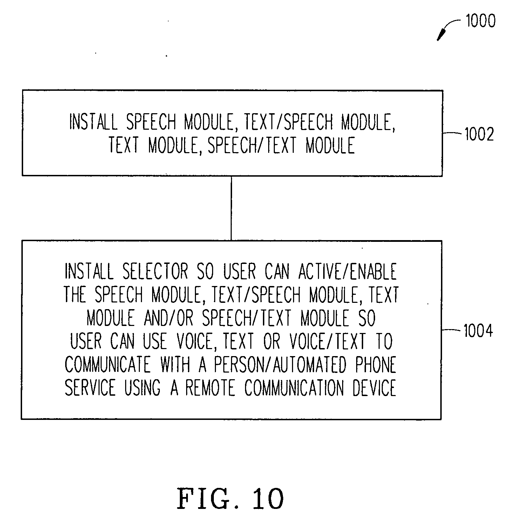

Referring to FIGURE 10, there is a flowchart showing the basic steps of a preferred method 1000 for making the communication device 102 so that it can enable the user 100 to select whether they want to use voice communications, text communications or voice/text communications to communicate with the user/automated phone service 104 of the remote communication device 106. At step 1002, the speech module 108, the text/speech module 112, the text module 114, the speech/text module 118, the speech input/output module 110 and the text input/output module 116 are installed within the communication device 102. At step 1004, the selector 107 is installed within the communication device 102. The selector 107 enables the user 100 to select and activate the speech module 108, the text/speech module 112, the text module 114 and/or the speech/text module 118 such that when:
- The speech module 108 is selected and activated then the user 100 can use voice communications 202a/202b to communicate with the user/automated phone service 104' of the voice-only-capable remote communication device 106' (see FIGURE 2).
- The text/speech module 112 is selected and activated then the user 100 can use voice communications 302a/302b to communicate with the user/automated phone service 104'' of a text-only-capable remote communication device 106" (see FIGURE 3).
- The text module 114 is selected and activated then the user 100 can use text communications 402a/402b to communicate with the user/automated phone service 104'' of a text-only-capable remote communication device 106'' (see FIGURE 4).
- The speech/text module 118 is selected and activated then the user 100 can use text communications 502a/502b to communicate with the user/automated phone service 104' of the voice-only-capable remote communication device 106' (see FIGURE 5).
- The speech/text module 118 and the speech module 108 are selected and activated then the user 100 can use either voice communications 602a'/602b' or text communications 602a''/602b'' to communicate with the user/automated phone service 104' of the voice-only-capable remote communication device 106' (see FIGURE 6).
- The text/speech module 112 and the text module 114 are selected and activated then the user 100 to use either voice communications 702a'/702b' or text communications 702a''/702b'' to communicate with the user/automated phone service 104'' of the text-only-capable remote communication device 106'' (see FIGURE 7).
- The speech module 108 and the text module 114 are selected and activated the user 100 to use voice communications 802a'/802b' and text communications 802a''/802b'' to communicate with the user 104''' of the remote communication device 106''' (see FIGURE 8).

From the foregoing, it should be readily appreciated by those skilled in the art that the communication device 102 can look like a touch-tone phone with a special display area that is capable of the following functionality:
1) Multimodal Input: the methods of input can be speech recognition, keypad, touch screen, and stylus.
2) Screen-Menu: a menu is decently displayed in the display area with an icon attached to each option. Options in the submenu can be folded/unfolded. The menu can be traced up/down (similar to the web application) using touch screen and/or stylus input methods.
3) Voice-To-Screen: the user can display the corresponding text content/data in the display area simultaneously when doing voice communication with a willing party or using an automated phone service. The user can save the screen text/data locally.
4) Screen-To-Voice: the user can listen to arriving text massages or read the data on the screen.
5) Intelligence: the device understands speech commands such as 'find' a buddy in the local directory and then 'call' the buddy.

Following is a list of some of the other features and advantages associated with the present invention:
- This invention provides a communication device 102 and method 1000 for interworking between a text-capable end-point and a voice-capable endpoint for the purpose of communication in real time.
- The communication device 102 can have a selector 107 that is a physical switch, push-buttons (alphanumeric keys) or could even be a voice-activated switch that enables the user 100 to configure the communication device 102.
- The communication device 102 can have a display 103 that is a touch-screen display 103 or a stylus-activated display 103.
- The communication device 102 can use a variety of software applications like VoiceXML (for example) to enable the conversions from text-to-speech and speech-to-text. The software applications like VoiceXML can also be used to enable push-button and touch-screen inputs by the user 100. In this case, the software application could function as the text/speech module 112 and the speech/text module 118.
- The communication device 102 enables real-time, interactive communication between two willing parties and allows a user 100 (with or without disabilities) to access appropriate resources via automated phone services.
- The communication device 102 can be a mobile phone, personal computer, personal digital assistant (PDA), land-line phone, a graphical proxy terminal, a teletype/teleprinter (TTY) or a telecommunication device for a deaf user (TDD).
- The present invention allows:(1) communications between a text-mode endpoint and a speech-mode endpoint;(2) communications between a text-mode endpoint and another text-mode endpoint; and (3) allows communications between a speech-mode endpoint and another speech-mode endpoint.The advantages associated with (1) and (2) are that a user 100 of the text-mode endpoint can be involved in a silent conversation without disturbing the quietness of his/her immediate surroundings (for example, in a meeting).
- It should be appreciated that user 100 and user/automated phone service 104 can both use a communication device 102 to communicate with one another in a wide variety of ways.
- Some additional advantages associated with using the communication device 102 include:
   -- providing the users (with/without disabilities) greater opportunity to equal access of telecommunications services.
   -- improving the customers' satisfaction for access of automated phone services.
   -- offering better privacy and personalization of automated phone services, e.g., a customer using silent communication mode when doing telephone banking in a public place such as airport, mall, bus etc.
   -- enabling access to non real-time applications such as listen e-mail, read voice-mail, etc.

The following features and combinations of features may also constitute advantageous embodiments of the present invention:
- A communication device capable of enabling a user to select whether they want to use voice communications, text communications or voice/text communications to communicate with a person/automated phone service using a remote communication device;
- Said remote communication device is a voice-only-capable communication device;
- Said remote communication device is a text-only-capable communication device;
- Said remote communication device is a voice-and-text capable communication device;
- Said user can change back-and-forth between voice, text and voice/text communications during a conversation with the person/automated phone service using the remote communication device;
- Said user can listen to voice communications received from the remote communication device and at the same time view a text version of the voice communications received from the remote communication device;
- Said user can view text communications received from the remote communication device and at the same time hear a voice version of the text communications received from the remote communication device;
- The communication device further comprising a display on which the user can view and input text communications;
- Said display is a touch-screen display or a stylus-activated display;
- A communication device comprising: a selector for enabling a user to select and activate one of the following: a speech module for enabling the user to use voice communications to interact with a voice-capable remote communication device; a text/speech module for enabling the user to use voice communications to interact with a text-capable remote communication device; a text module for enabling the user to use text communications to interact with a text-capable remote communication device; a speech/text module for enabling the user to use text communications to interact with a voice-capable remote communication device; a speech/text module and a speech module for enabling the user to use voice/text communications to interact with a voice-capable remote communication device; or a text/speech module and a text module for enabling the user to use voice/text communications to interact with a text-capable remote communication device;
- Said user can also use the selector to select and activate a speech module and a text module so that the user can use voice/text communications to interact with a remote communication device configured like said communication device;
- When said speech module is selected and activated then the user can use voice communications to interact with the voice-capable remote communication device by: receiving voice communications from a speech input/output module that were processed by said speech module after being received as voice communications from the voice-capable remote communication device; and outputting voice communications into said speech input/output module which are processed by said speech module and then transmitted as voice communications to the voice-capable remote communication device;
- When said text/speech module is selected and activated then the user can use voice communications to interact with the text-capable remote communication device by: receiving voice communications from a speech input/output module which have been processed by said text/speech module and converted into the received voice communications from text communications transmitted from the text-capable remote communication device; and outputting voice communications into said speech input/output module which are processed by said text/speech module and converted into text communications that are transmitted to the text-capable remote communication device;
- When said text module is selected and activated then the user can use text communications to interact with the text-capable remote communication device by: receiving text communications from a text input/output module which have been processed by said text module after being received as text communications from the text-capable remote communication device; and outputting text communications into said text input/output module which are processed by said text module and transmitted as text communications to the text-capable remote communication device;
- When said speech/text module is selected and activated then the user can use text communications to interact with the voice-capable remote communication device by: receiving text communications from a text input/output module which have been processed by said speech/text module and converted into the received text communications from voice communications transmitted from the voice-capable remote communication device; and outputting text communications into said text input/output module which are processed by said speech/text module and converted into voice communications that are transmitted to the voice-capable remote communication device;
- When said speech/text module and said speech module are selected and activated then the user can use voice/text communications to interact with the voice-capable remote communication device by: receiving voice communications from a speech input/output module that were processed by said speech module after being received as voice communications from the voice-capable remote communication device and at the same time receiving text communications from a text input/output module which have been processed by said speech/text module and converted into the received text communications from the voice communications transmitted from the voice-capable remote communication device; and outputting voice communications into said speech input/output module which are processed by said speech module and then transmitted as voice communications to the voice-capable remote communication device or outputting text communications into said text input/output module which are processed by said speech/text module and converted into voice communications that are transmitted to the voice-capable remote communication device;
- When said text/speech module and said text module are selected and activated then the user can use voice/text communications to interact with the text-capable remote communication device by: receiving text communications from a text input/output module which have been processed by said text module after being received as text communications from the text-capable remote communication device and at the same time receiving voice communications from a speech input/output module which have been processed by said text/speech module and converted into the received voice communications from text communications transmitted from the text-capable remote communication device; and outputting text communications into said text input/output module which are processed by said text module and transmitted as text communications to t-he text-capable remote communication device or outputting voice communications into said speech input/output module which are processed by said text/speech module and converted into text communications that are transmitted to the text-capable remote communication device;
- The communication device further comprising a display on which the user can view and input text communications;
- Said display is a touch-screen display or a stylus-activated display;
- Said text communications are in a form of a menu capable of being folded and unfolded in a display area of said display;
- Said text communications are instant messages;
- Said communication device is: a land-line phone; a graphical proxy terminal; a mobile phone; a personal computer; a personal digital assistant; a teletype/teleprinter (TTY); or a telecommunication device for a deaf user (TDD);
- Said user can use speech commands to have a specific task performed by said communication device;
- A method for using a communication device, said method comprising the step of: enabling a user to select whether they want to use voice communications, text communications or voice/text communications to communicate with a person/automated phone service using a remote communication device by letting the user select and activate one of the following: a speech module for enabling the user to use voice communications to interact with a voice-capable remote communication device; a text/speech module for enabling the user to use voice communications to interact with a text-capable remote communication device; a text module for enabling the user to use text communications to interact with a text-capable remote communication device; a speech/text module for enabling the user to use text communications to interact with a voice-capable remote communication device; a speech/text module and a speech module for enabling the user to use voice/text communications to interact with a voice-capable remote communication device; or a text/speech module and a text module for enabling the user to use voice/text communications to interact with a text-capable remote communication device;
- Said user can also use the selector to select and activate a speech module and a text module so that the user can use voice/text communications to interact with the remote communication device;
- When said speech module is selected and activated then the user can use voice communications to interact with the voice-capable remote communication device by: receiving voice communications from a speech input/output module that were processed by said speech module after being received as voice communications from the voice-capable remote communication device; and outputting voice communications into said speech input/output module which are processed by said speech module and then transmitted as voice communications to the voice-capable remote communication device;
- When said text/speech module is selected and activated then the user can use voice communications to interact with the text-capable remote communication device by: receiving voice communications from a speech input/output module which have been processed by said text/speech module and converted into the received voice communications from text communications transmitted from the text-capable remote communication device; and outputting voice communications into said speech input/output module which are processed by said text/speech module and converted into text communications that are transmitted to the text-capable remote communication device;
- When said text module is selected and activated then the user can use text communications to interact with the text-capable remote communication device by: receiving text communications from a text input/output module which have been processed by said text module after being received as text communications from the text-capable remote communication device; and outputting text communications into said text input/output module which are processed by said text module and transmitted as text communications to the text-capable remote communication device;
- When said speech/text module is selected and activated then the user can use text communications to interact with the voice-capable remote communication device by: receiving text communications from a text input/output module which have been processed by said speech/text module and converted into the received text communications from voice communications transmitted from the voice-capable remote communication device; and outputting text communications into said text input/output module which are processed by said speech/text module and converted into voice communications that are transmitted to the voice-capable remote communication device;
- When said speech/text module and said speech module are selected and activated then the user can use voice/text communications to interact with the voice-capable remote communication device by: receiving voice communications from a speech input/output module that were processed by said speech module after being received as voice communications from the voice-capable remote communication device and at the same time receiving text communications from a text input/output module which have been processed by said speech/text module and converted into the received text communications from the voice communications transmitted from the voice-capable remote communication device; and outputting voice communications into said speech input/output module which are processed by said speech module and then transmitted as voice communications to the voice-capable remote communication device or outputting text communications into said text input/output module which are processed by said speech/text module and converted into voice communications that are transmitted to the voice-capable remote communication device;
- When said text/speech module and said text module are selected and activated then the user can use voice/text communications to interact with the text-capable remote communication device by: receiving text communications from a text input/output module which have been processed by said text module after being received as text communications from the text-capable remote communication device and at the same time receiving voice communications from a speech input/output module which have been processed by said text/speech module and converted into the received voice communications from text communications transmitted from the text-capable remote communication device; and outputting text communications into said text input/output module which are processed by said text module and transmitted as text communications to the text-capable remote communication device or outputting voice communications into said speech input/output module which are processed by said text/speech module and converted into text communications that are transmitted to the text-capable remote communication device;
- Said communication device includes a display on which the user can view and input text communications;
- Said display is a touch-screen display or a stylus-activated display;
- Said text communications are instant messages;
- Said communication device is: a land-line phone; a graphical proxy terminal; a mobile phone; a personal computer; a personal digital assistant; a teletype/teleprinter (TTY); or a telecommunication device for a deaf user (TDD);
- A method for making a communication device that enables a user to select whether they want to use voice communications, text communications or voice/text communications to communicate with a person/automated phone service using a remote communication device, said method comprising the steps of: installing, within said communication device, a speech module, a text module, a speech/text module, a text/speech module, a speech input/output module and a text input/output module; installing, within said communication device, a selector that enables a user to select and activate said speech module, said text/speech module, said text module and/or said speech/text module; wherein when said speech module is selected and activated then the user can use voice communications to interact with the person/automated phone service using a voice-capable remote communication device; wherein when said text/speech module is selected and activated then the user can use voice communications to interact with the person/automated phone service using a text-capable remote communication device; wherein when said text module is selected and activated then the user can use text communications to interact with the person/automated phone service using a text-capable remote communication device; wherein when said speech/text module is selected and activated then the user can use text communications to interact with the person/automated phone service using a voice-capable remote communication device; wherein when said speech/text module and said speech module are selected and activated then the user can use either voice communications or text communications to interact with the person/automated phone service using a voice-capable remote communication device; and wherein when said text/speech module and said text module are selected and activated then the user can use either voice communications or text communications to interact with the person/automated phone service using a text-capable remote communication device;
- Said user can also use the selector to select and activate said speech module and said text module so that the user can use voice/text communications to interact with the person/automated phone service using the remote communication device;
- When said speech module is selected and activated then the user can use voice communications to interact with the person/automated phone service using the voice-capable remote communication device by: receiving voice communications from said speech input/output module that were processed by said speech module after being received as voice communications from the voice-capable remote communication device; and outputting voice communications into said speech input/output module which are processed by said speech module and then transmitted as voice communications to the voice-capable remote communication device;
- When said text/speech module is selected and activated then the user can use voice communications to interact with the person/automated phone service using the text-capable remote communication device by: receiving voice communications from said speech input/output module which have been processed by said text/speech module and converted into the received voice communications from text communications transmitted from the text-capable remote communication device; and outputting voice communications into said speech input/output module which are processed by said text/speech module and converted into text communications that are transmitted to the text-capable remote communication device;
- When said text module is selected and activated then the user can use text communications to interact with the person/automated phone service using the text-capable remote communication device by: receiving text communications from said text input/output module which have been processed by said text module after being received as text communications from the text-capable remote communication device; and outputting text communications into said text input/output module which are processed by said text module and transmitted as text communications to the text-capable remote communication device;
- When said speech/text module is selected and activated then the user can use text communications to interact with the person/automated phone service using the voice-capable remote communication device by: receiving text communications from said text input/output module which have been processed by said speech/text module and converted into the received text communications from voice communications transmitted from the voice-capable remote communication device; and outputting text communications into said text input/output module which are processed by said speech/text module and converted into voice communications that are transmitted to the voice-capable remote communication device;
- When said speech/text module and said speech module are selected and activated then the user can use either voice communications or text communications to interact with the person/automated phone service using the voice-capable remote communication device by: receiving voice communications from said speech input/output module that were processed by said speech module after being received as voice communications from the voice-capable remote communication device and at the same time receiving text communications from a text input/output module which have been processed by said speech/text module and converted into the received text communications from the voice communications transmitted from the voice-capable remote communication device; and outputting voice communications into said speech input/output module which are processed by said speech module and then transmitted as voice communications to the voice-capable remote communication device or outputting text communications into said text input/output module which are processed by said speech/text module and converted into voice communications that are transmitted to the voice-capable remote communication device;
- When said text/speech module and said text module are selected and activated then the user can use either voice communications or text communications to interact with the person/automated phone service using the text-capable remote communication device by: receiving text communications from said text input/output module which have been processed by said text module after being received as text communications from the text-capable remote communication device and at the same time receiving voice communications from a speech input/output module which have been processed by said text/speech module and converted into the received voice communications from text communications transmitted from the text-capable remote communication device; and outputting text communications into said text input/output module which are processed by said text module and transmitted as text communications to the text-capable remote communication device or outputting voice communications into said speech input/output module which are processed by said text/speech module and converted into text communications that are transmitted to the text-capable remote communication device;
- The method further comprising the step of installing, within the communication device, a display on which the user can view and input text communications;
- Said display is a touch-screen display or a stylus-activated display;
- A communication device, comprising: a speech module for receiving and transmitting audio communication; a speech-to-text conversion module for receiving audio communication, translating the audio communication to text and displaying a text message; a text-to-speech conversion module for receiving a text communication, translating the text communication to audio communication and outputting the audio communication; and a user operable switch to select multiple modes of operation of the communication device such that speech or text can be outputted or such that speech and text are both concurrently outputted;
- The communication device further comprising a display on which the user.can view and input text;
- Said display is a touch-screen display or a stylus-activated display.

Although one embodiment of the present invention has been illustrated in the accompanying Drawings and described in the foregoing Detailed Description, it should be understood that the invention is not limited to the embodiment disclosed, but is capable of numerous rearrangements, modifications and substitutions without departing from the spirit of the invention as set forth and defined by the following claims.

## Claims

1. A communication device capable of interworking between a voice application and a text application which enables a user to select whether they want to use voice communications or text communications to communicate with a user of a remote communication device.

2. The communication device of Claim 1, wherein said remote communication device is a voice-only-capable communication device.

3. The communication device of Claim 1, wherein said remote communication device is a text-only-capable communication device.

4. The communication device of Claim 1, wherein said remote communication device is a voice-and-text capable communication device.

5. The communication device of Claim 1, wherein said user is capable of changing back-and-forth between voice communications and text communications during a conversation with the user of the remote communication device.

6. The communication device of Claim 1, wherein said user is capable of selecting whether they want to use voice/text communication to communicate with the user of the remote communication device.

7. A method for using a communication device, said method comprising the step of:
enabling a user to select whether they want to use voice communications or text communications to communicate with a user of a remote communication device by letting the user to select and activate one of the following:
a speech module for enabling the user to use voice communications to communicate with a user of a voice-capable remote communication device;
a text/speech module for enabling the user to use voice communications to communicate with a user of a text-capable remote communication device;
a text module for enabling the user to use text communications to communicate with a user of a text-capable remote communication device; or
a speech/text module for enabling the user to use text communications to communicate with a user of a voice-capable remote communication device.

8. The method of Claim 7, wherein said user can also select and activate a speech/text module and a speech module for enabling the user to use voice/text communications to interact with a voice-capable remote communication device.

9. The method of Claim 7, wherein said user can also select and activate a text/speech module and a text module for enabling the user to use voice/text communications to interact with a text-capable remote communication device.

10. The method of Claim 7, wherein said communication device includes a display on which the user can view and input text communications.
